# EUROPÄISCHE PATENTANMELDUNG

(11) **EP 0 848 976 A2**
(43) Veröffentlichungstag der Anmeldung: **24.06.1998**
(21) Anmeldenummer: 97122174.2
(22) Anmeldetag: 16.12.1997
(51) Int. Cl.: B01D 29/62, B01D 35/143

(54) **Rückspülbare Filtereinrichtung**

(30) Priorität: 20.12.1996 DE 19653269
(71) Anmelder: HONEYWELL AG, D-63067 Offenbach am Main (DE)
(72) Erfinder: Bostel-d'Argent, Rainer, Dr.-Ing., 74821 Mosbach-N (DE); Wilson, Mark, Vadanis Heights, MN 55127 (US)
(74) Vertreter: Herzbach, Dieter, Dipl.-Ing.

(57) **Zusammenfassung**

Eine rückspülbare Filtereinrichtung (10) ist mit einer Betätigungseinrichtung (20) versehen, die die Rückspülung durch Öffnen eines Ablaßventiles einleitet. Die Betätigungseinrichtung (20) ist mit einem Sensor (22) verbunden, der optisch durch eine durchsichtige Filtertasse (14) den Verschmutzungsgrad eines Filtergitters überwacht und bei entsprechender Verschmutzung ein Aktivierungssignal an die Betätigungseinrichtung (20) liefert.

## Beschreibung

Die vorliegende Erfindung bezieht sich auf eine rückspülbare Filtereinrichtung nach dem Gattungsbegriff des Patentanspruches 1.

Eine bekannte rückspülbare Filtereinrichtung gemäß dem Gattungsbegriff des Patentanspruches 1 kann beispielsweise der EP 0 723 797 A1 entnommen werden. Die Rückspülung einer solchen Filtereinrichtung kann beispielsweise von Hand von Zeit zu Zeit vorgenommen werden, da durch die durchsichtige Filtertasse der Verschmutzungsgrad des Filters erkennbar ist. Durch Öffnen eines Ablaßventils wird der Rückspülvorgang eingeleitet. Es ist aber auch bekannt, mit dem Ablaßventil einen elektrischen Antrieb zu verbinden und diesen gemäß einem Zeitprogramm zu betätigen.

Aufgabe der vorliegenden Erfindung ist es, eine derartige rückspülbare Filtereinrichtung so auszugestalten, daß die Rückspülung automatisch in Abhängigkeit von dem Verschmutzungsgrad des Filters eingeleitet wird.

Die Lösung dieser Aufgabe gelingt gemäß den kennzeichnenden Merkmalen des Patentanspruches 1. Weitere vorteilhafte Ausgestaltungen der rückspülbaren Filtereinrichtung sind den abhängigen Ansprüchen entnehmbar.

Anhand eines in den Figuren der beiliegenden Zeichnung dargestellten Ausführungsbeispieles sei im folgenden die Erfindung näher erläutert. Es zeigen:
- Fig. 1: eine rückspülbare Filtereinrichtung gemäß der Erfindung mit einen, Sensor und einer Betätigungseinrichtung;
- Fig. 2: das Prinzipschaltbild eines mit der Filtereinrichtung zusammenwirkenden Sensors in einer ersten Ausführungsform:
- Fig. 3: das Prinzipschaltbild eines mit der Filtereinrichtung zusammenwirkenden Sensors in einer zweiten Ausführungsform; und
- Fig. 4: eine Variante der zweiten Ausführungsform.

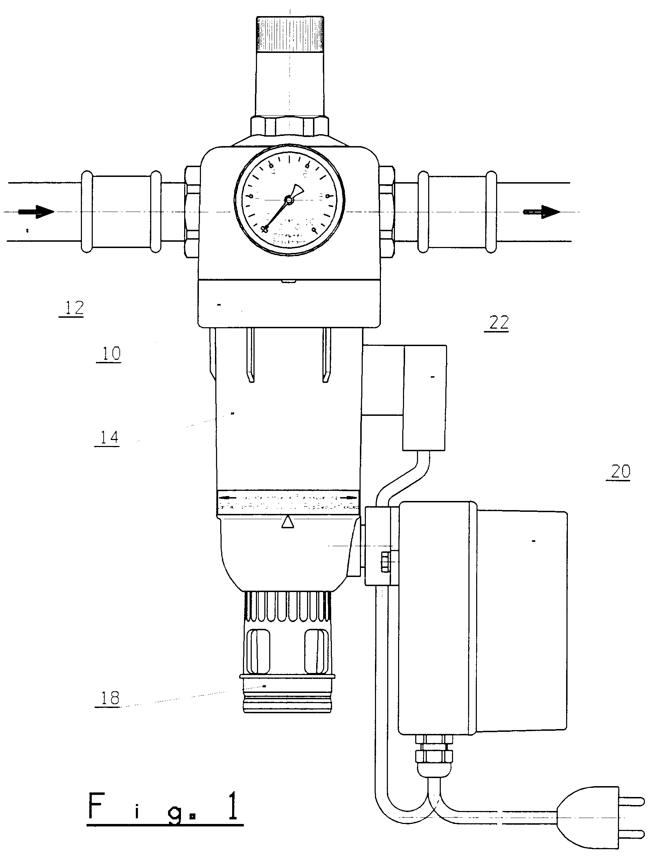

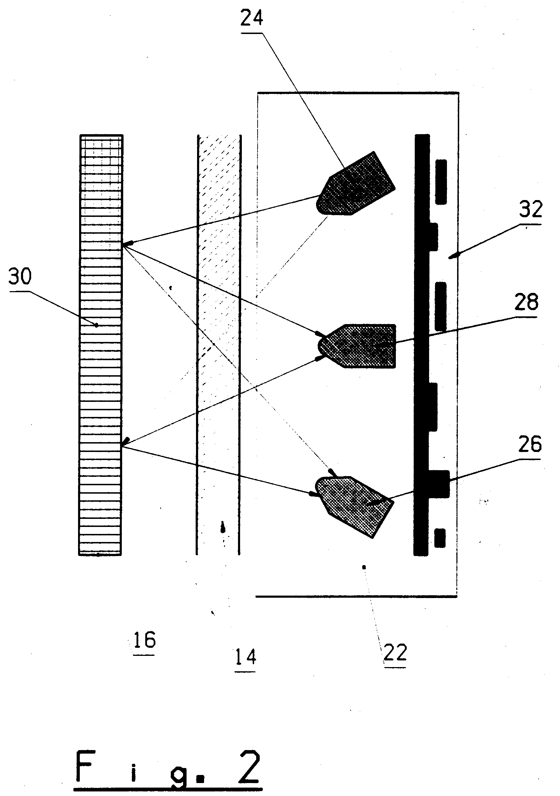

Gemäß Fig. 1 ist eine rückspülbare Filtereinrichtung 10, die im wesentlichen derjenigen Filtereinrichtung entspricht, wie sie in der EP 0 723 797 A1 beschrieben ist, an eine Wasserleitung 12 angeschlossen. Die Filtereinrichtung 10 umfaßt eine durchsichtige Filtertasse 14, in der ein zylindrisches Filtergitter 16 (Fig. 2) angeordnet ist, das im Normalbetrieb von außen nach innen und im Rückspülbetrieb von innen nach außen durchtlossen wird, wie dies im Stand der Technik bekannt ist. Die Rückspülung wird hierbei in bekannter Weise durch Öffnen eines Ablaßventils eingeleitet, wobei die sich auf dem Filtergitter 16 angesammelten Partikel durch das Ablaßventil und einen darunter angeordneten Trichter 18 abgeführt werden. Das Öffnen des Ablaßventils erfolgt über eine Betätigungseirrichtung 20, die mit einem elektrischen Antrieb versehen ist und von einem Sensor 22 betätigt wird, der durch die durchsichtige Filtertasse 14 den Verschmutzungsgrad des Filtergitters 16 erfaßt.

Gemäß Fig. 2 umfaßt der Sensor 22 eine lichtemittierende Diode LED 24, die durch die durchsichtigte Filtertasse 14 die Außenwand des Filtergitters 16 unter einem vorgegebenen Winkel beleuchtet. Das Filtergitter 16 ist üblicherweise ein Metallgitter, das gewisse Reflexionseigenschaften aufweist. Eine Photodiode 26 ist im Wege des Reflexlichtes in dem Sensor 22 angeordnet, d.h. diese Photodiode 26 ist unter dem gleichen Winkel wie die lichtemittierende Diode LED 24 auf das Filtergitter 16 ausgerichtet. Schließlich ist eine weitere Photodiode 28 vorzugsweise gegenüber dem Beleuchtungsfleck 30 auf dem Filtergitter 16 in dem Sensor 22 angeordnet, die im Falle der Verschmutzung des Filtergitters 16 Streulicht empfängt. Ein in dem Sensor 22 angeordneter elektronischer Schaltkreis 32 steuert die lichtemittierende Diode LED 24 an und wertet die Signale der Photodioden 26 und 28 aus, indem er das Verhältnis aus Streulicht zu Reflexlicht bestimmt und daraus ein Aktivierungssignal für die Betätigungseinrichtung 20 herleitet.

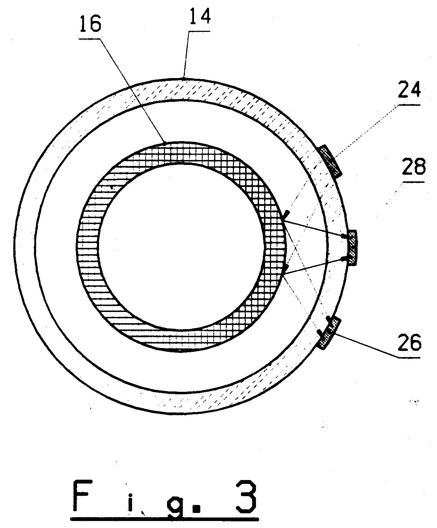

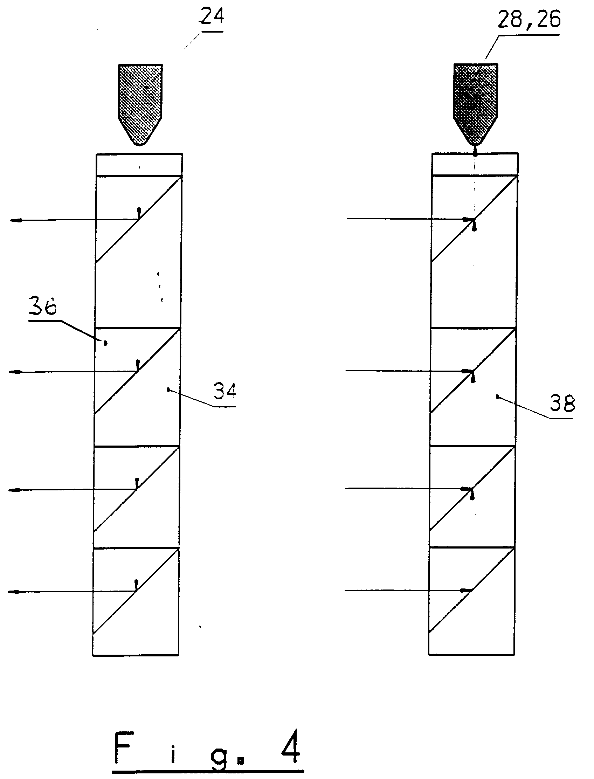

Die Bildung des Verhältnisses aus Streulicht und Reflexlicht besitzt den Vorteil, daß Gleichtakteffekte unterdrückt werden, wie beispielsweise eine Abschwächung des Lichtes durch Änderung der Durchlässigkeit der Filtertasse 14, durch thermische Einflüsse usw. Während in Fig. 2 die lichtemittierende Diode 24 und die das Reflexlicht bzw. das Streulicht empfangenden Photodioden 26 und 28 achsparallel zu der Filtereinrichtung 10 übereinander angeordnet sind, können diese Dioden 24, 26 und 28 auch über den Umfang der Filtereinrichtung verteilt nebeneinander im Abstand voneinander so angeordnet werden, wie dies in Fig. 3 dargestellt ist. Hierbei können mehrere LED's 24 und Photodioden 26, 28 übereinander angeordnet und in Reihe geschaltet werden. Anstelle der Verwendung von mehreren LED's und Photodioden kann auch eine Anordnung Anwendung finden, wie sie in Fig. 4 dargestellt ist.

Dort wird durch eine Anordnung von Prismen 36 übereinander eine stabförmige Lichtquelle 34 bzw. ein stabförmiger Lichtempfänger 38 gebilde. Die lichtemittierende Diode 24 strahlt von oben in die Anordnung von Prismen 36 hinein. Jedes Prisma 36 reflektiert einen Teil des eingestrahlten Lichtes nach außen und läßt einen Teil des eingestrahlten Lichtes hindurch, um auf das nächste Prisma zu teffen. Um eine gleichmäßige Lichtverteilung zu erhalten, sind die nachfolgenden Prismen entsprechend dem verringerten auf sie auftreffenden Lichtanteil in kürzerem Abstand angeordnet. Gleiches gilt für den Lichtempfänger 36, der gemäß Fig. 3 zweifach vorgesehen ist, wobei die Photodioden 26, 28 das durch den Lichtempfänger gesammelte Licht jeweils aufnehmen.

## Patentansprüche

1. Rückspülbare Filtereinrichtung (10) mit einem in einer durchsichtigen Filtertasse (14) angeordneten Filtergitter (16), das im Normalbetrieb von außen nach innen und im Rückspülbetrieb von innen nach außen durchströmt wird, wobei die Rückspülung durch das Öffnen eines Ablaßventiles eingeleitet wird,
**gekennzeichnet durch** eine an sich bekannte Betätigungseinrichtung (20) für das Ablaßventil und einen optischen Sensor (22), der das Filtergitter (16) durch die durchsichtige Filtertasse (14) auf seinen Verschmutzungsgrad überwacht, um bei einem vorgegebenen Verschmutzungsgrad ein Aktivierungssignal an die Betätigungseinrichtung (20) zu liefern.

2. Rückspülbare Filtereinrichtung nach Anspruch 1, **dadurch gekennzeichnet,** daß der optische Sensor (22) eine lichtemittierende Diode LED (24) und wenigstens eine Photodiode (26) umfaßt.

3. Rückspülbare Filtereinrichtung nach Anspruch 2, **dadurch gekennzeichnet,** daß der optische Sensor (22) eine erste Photodiode (26) aufweist, die im Reflexlicht angeordnet ist und eine weitere Photodiode (28) aufweist, die im Streulicht angeordnet ist.

4. Rückspülbare Filtereinrichtung nach Anspruch 3, **dadurch gekennzeichnet,** daß der optische Sensor (22) eine Auswerteelektronik aufweist, die das Reflexlichtsignal zu dem Streulichtsignal in Beziehung setzt und aus dem Verhältnis beider Signale das Aktivierungssignal für die Betätigungseinrichtung (20) herleitet.

5. Rückspülbare Filtereinrichtung nach Anspruch 3, **dadurch gekennzeichnet,** daß die lichtemittierende Diode (24) und die Photodioden (26,28) achsparallel zu der Filtereinrichtung (10) übereinander angeordnet sind.

6. Rückspülbare Filtereinrichtung nach Anspruch 3, **dadurch gekennzeichnet,** daß die lichtemittierende Diode (24) und die Photodioden (26,28) über den Umfang der Filtereinrichtung (10) nebeneinander angeordnet sind.

7. Rückspülbare Filtereinrichtung nach Anspruch 6, **dadurch gekennzeichnet,** daß mehrere lichtemittierenden Dioden (24) und mehrere Photodioden (26,28) elektrisch in Reihe geschaltet und übereinander angeordnet sind.

8. Rückspülbare Filtereinrichtung nach Anspruch 6, **dadurch gekennzeichnet,** daß aus übereinander angeordneten Prismen (36) eine Lichtquelle (34) bzw. Lichtempfänger (38) gebildet werden, wobei die lichtemittierende Diode (24) in die Prismenanordnung hineinstrahlt bzw. die Photodioden (26,28) das aus der Prismenanordnung austretende Licht empfangen.

9. Rückspülbare Filtereinrichtung nach Anspruch 8, **dadurch gekennzeichnet,** daß der Abstand der Prismen (36) innerhalb der Prismenanordnung im Hinblick auf eine gleichmäßige Intensitätsverteilung des abgestrahlten bzw. empfangenen Lichtes abgestuft ist.
